(19) Europäisches Patentamt
European Patent Office
Office européen des brevets

(11) Veröffentlichungsnummer: **0 007 502**
**B1**

(12) # EUROPÄISCHE PATENTSCHRIFT

(45) Veröffentlichungstag der Patentschrift: **30.12.81**

(51) Int. Cl.³: **C 08 G 18/22**

(21) Anmeldenummer: **79102330.2**

(22) Anmeldetag: **09.07.79**

(54) **Verfahren zur Herstellung von Formschaumstoffen.**

(30) Priorität: **22.07.78 DE 2832253**

(43) Veröffentlichungstag der Anmeldung: **06.02.80 Patentblatt 80/3**

(45) Bekanntmachung des Hinweises auf die Patenterteilung: **30.12.81 Patentblatt 81/52**

(84) Benannte Vertragsstaaten: **AT BE DE FR GB IT NL SE**

(56) Entgegenhaltungen:
**DE-A-2 339 980**
**DE-A1-2 550 180**
**DE-A1-2 657 413**
**US-A-4 067 832**

(73) Patentinhaber: **BAYER AG, Zentralbereich Patente, Marken und Lizenzen, D-5090 Leverkusen 1, Bayerwerk (DE)**

(72) Erfinder: **Meyborg, Holger, Dr., Bergstrasse 92, D-5068 Odenthal (DE)**
Erfinder: **Mormann, Werner, Dr., Odenthaler Strasse 62, D-5090 Leverkusen 1 (DE)**
Erfinder: **Grögler, Gerhard, Dr., von Diergardt-Strasse 46, D-5090 Leverkusen 1 (DE)**
Erfinder: **Schwindt, Jürgen, Dr., Kleist-Platz 4, D-5090 Leverkusen 1 (DE)**

**EP 0 007 502 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von Formschaumstoffen

Die vorliegende Erfindung betrifft ein Verfahren zur Herstellung von witterungsbeständigen Polyurethan-Schaumstoffen, die praktisch nicht vergilben. Kennzeichnend für das erfindungsgemässe Verfahren ist die Verwendung neuartiger Katalysatoren für die Polyadditionsreaktion.

Schaumstoffe auf Basis von Polyisocyanaten, z.B. Polyurethanschaumstoffe mit einer dichten Aussenhaut und einem zelligen Kern, wie sie gemäss der Methode der Formverschäumung (DE-A-1 196 864, DE-A-1 694 138 und FR-A-1 559-325) erhalten werden, eignen sich vorzüglich für die Serienherstellung von Leichtbaukonstruktionen, z.B. für den Möbel-, Fahrzeug- und Hausbau, bzw. von elastischen Formteilen wie Kissen, Stossdämpfer oder Schuhsohlen. Die Polyurethan-Formkörper werden hergestellt, indem das schäumfähige Reaktionsgemisch, das aus Polyisocyanaten, Verbindungen, die mindestens zwei Isocyanaten reagierende Wasserstoffatome tragen, und Zusatzstoffen besteht, in geschlossene, temperierbare Formwerkzeuge gefüllt wird, in denen es aufschäumt und – stark verdichtet – erstarrt. Der Kunststoff füllt das Werkzeug exakt aus und bildet die Werkzeuginnenflächen genau ab.

Die bisher im Markt angebotenen harten und halbharten Polyurethanschaumstoffe sind im wesentlichen Polyadditionsprodukte von aromatischen Polyisocyanaten mit Polyäther- oder Polyesterpolyolen. Derartige Formkörper weisen zwar ein hohes mechanisches Werteniveau auf, das sie für viele der obengenannten Anwendungen geeignet macht. Ein Nachteil all dieser Formteile ist aber, dass sie bei Witterungseinfluss vergilben und zusätzlich an der Oberfläche infolge chemischen Abbaus aufrauhen, so dass die Formteile für erhöhte Ansprüche mit einer schützenden Lackschicht versehen werden müssen.

Es ist bekannt, dass Polyurethane auf Basis alipathischer oder alicyclischer Isocyanate diese Vergilbung nicht zeigen. Jedoch scheiterten bisher alle Versuche zur Herstellung von Polyurethan-Formschaumstoffen auf Basis aliphatischer und alicyclischer Isocyanate an der Katalyse. Da es bei der Herstellung von Formschaumstoffen nicht möglich ist, durch nachträgliche thermische Behandlung eines Formkörpers den typischen Aufbau mit kompakter Aussenhaut und zelligem Kern, bei dem die Dichte von den Wandungen aus zur Formteilmitte hin ständig abnimmt, zu erhalten, muss die Reaktion durch geeignete Katalyse so geführt werden, dass nach einer kurzen Liegezeit des flüssigen Gemisches der Ausgangskomponenten die Reaktion beginnt und schon nach wenigen Sekunden – in denen das Material aufschäumt und erstarrt – beendet ist. Nur so ist gewährleistet, dass infolge von Kondensation des Treibmittels an den Wandungen der Form und Verdampfung des Treibmittels im Innern des Formteils der gewünschte typische Dichtegradient des Formteils entsteht.

Aus der DE-A- 2 657 413 ist ein Verfahren zur Herstellung eines Polyurethanschaumstoffs mit hoher Elastizität unter Verwendung einer schwefelhaltigen organischen Zinnverbindung als Katalysator bekannt geworden. Diese Literaturstelle betrifft jedoch nicht die Herstellung von Schaumstoffkörpern mit kompakter Oberfläche und zelligem Kern durch Formverschäumung und der gemäss dieser Literaturstelle verwendete Katalysator ist – wie durchgeführte Versuche gezeigt haben – auch nicht für die Herstellung von derartigen Formkörpern geeignet, weil die hierfür erforderliche Abstimmung zwischen Start- und Abbindezeiten nicht erzielt werden können.

Auch die US-A 4 067 832 beschreibt nicht die Herstellung von Schaumstoffkörpern mit kompakter Oberfläche und zelligem Kern. Die gemäss dieser Literaturstelle zu verwendende Katalysatorkombination ist, wie das (Vergleichs)Beispiel 4 zeigt, für die Herstellung von derartigen Formkörpern auch nicht geeignet.

Zum Stand der Technik gehören ferner die DE-A-2 339 980 und die DE-A-25 50 180. Diese Literaturstellen beschreiben weder die Herstellung von Formkörpern mit kompakter Oberfläche und zelligem Kern und einer integralen Dichteteilung über den Querschnitt noch lehren sie die hierfür erforderlichen Massnahmen.

Es wurde nun gefunden, dass sich hervorragende harte und halbharte Formschaumstoffe, die bei Witterungseinfluss praktisch nicht vergilben und auch nur sehr geringen chemischen Abbau durch Bewitterung zeigen, herstellen lassen, wenn als Polyisocyanate aliphatische und/oder alicyclische Isocyanate verwendet werden, zusammen mit aminfreien Katalysatorkombinationen aus Alkali- und/oder Erdalkalihydroxiden und bestimmten organischen Metallkatalysatoren.

Gegenstand der vorliegenden Erfindung ist somit ein Verfahren zur Herstellung von Schaumstoffkörpern mit kompakter Oberfläche und zelligem Kern sowie integraler Dichteverteilung über den Querschnitt der Formkörper durch Umsetzung eines schäumfähigen Reaktionsgemisches aus

A) Polyisocyanaten,

B) höhermolekularen und/oder niedermolekularen Verbindungen mit durchschnittlich mindestens zwei gegenüber Isocyanaten reaktiven Wasserstoffatomen, in Gegenwart von

C) Katalysatoren für die Isocyanat-Polyadditionsreaktion sowie

D) Treibmitteln und gegebenenfalls weiteren an sich bekannten Zusatzstoffen,

in einer geschlossenen Form unter den Bedingungen der Formverschäumung, dadurch gekennzeichnet, dass als Komponente A) aliphatische und/oder alicyclische Polyisocyanate und als Komponente C) Katalysator-Kombinationen aus

(i) einem Alkali- und /oder Erdalkalihydroxid, insbesondere Lithium-, Natrium-, Kalium-, Magnesium- und/oder Calciumhydroxid und (ii) einer schwefelhaltigen metallorganischen Verbindung der allgemeinen Formel

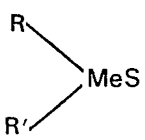
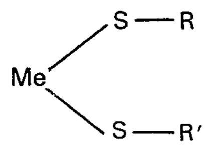
und
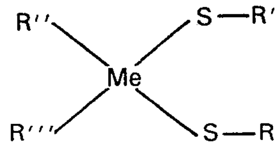

in der
Me Zinn oder Blei darstellt,
R, R', R'' und R''' gleich oder verschieden sind und für einen verzweigten oder linearen Alkylrest mit 1 bis 20 C-Atomen oder einen gegebenenfalls durch $C_1$-$C_4$-Alkylgruppen substituierten Cycloalkylrest mit 6 bis 15 C-Atomen oder einen gegebenenfalls mit $C_1$-$C_6$-Alkylgruppen substituierten Phenylrest stehen,
eingesetzt werden.

Als schwefelhaltige metallorganische Verbindungen werden bevorzugt zinnorganische Verbindungen eingesetzt.

Besonders bevorzugt sind Verbindungen der allgemeinen Formel

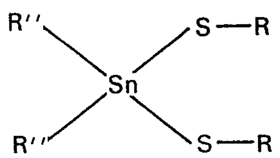

in welcher
R für einen gegebenenfalls verzweigten Alkylrest mit 8 bis 12 C-Atomen und
R'' für einen gegebenenfalls verzweigten Alkylrest mit 4 bis 8 C-Atomen stehen.

Als schwefelhaltige Katalysatoren seien beispielhaft genannt: Dibutylzinn(IV)sulfid, Dioctylzinn(IV)sulfid, Dibutylzinn(IV)-bis-dodecylmercaptid, Dioctylzinn(IV)-bis-dodecylmercaptid und Zinn(II)-bis-(2-äthylhexylmercaptid). Dibutylzinn-(IV)-bis-dodecylmercaptid ist erfindungsgemäss besonders bevorzugt.

Als Alkali- bzw. Erdalkalihydroxide kommen erfindungsgemäss die Hydroxide von Li, Na, K, Rb, Cs, Mg, Ca, Sr und/oder Ba in Frage. Bevorzugt sind Na-, K- und Ca-Hydroxid; Kaliumhydroxid ist wegen seiner Löslichkeit in Polyolen besonders bevorzugt.

Die erfindungsgemässen Katalysator-Kombinationen werden normalerweise in Mengen von 0,005–4 Gew.-%, vorzugsweise 0,1:1,0 Gew.-%, bezogen auf Polyurethanfeststoff, eingesetzt, wobei das Molverhältnis von Alkali- und/oder Erdalkalihydroxid zu metallorganischer Verbindung 6:1 bis 1:6, vorzugsweise 3:1 bis 1:3, beträgt und das Alkali- und/oder Erdalkalihydroxid vorzugsweise in Form einer 1 bis 40 %igen, vorzugsweise 5–15 %igen Lösung in einem niedermolekularen Alkohol vorliegt. Sie können dem Reaktionsgemisch sowohl getrennt als Einzelkomponenten als auch als Mischung der Komponenten zugesetzt werden.

Die in der Polyurethanchemie an sich gebräuchlichen Sn(II)- und Sn(IV)-carboxylate wie Sn(II)-octoat oder Dibutylzinndilaurat sind hingegen für das erfindungsgemässe Verfahren nicht geeignet.

Bekanntlich können Schaumstoffe durch Polymerisation von Polyisocyanaten allein oder auch durch Polyadditionsreaktion von Polyisocyanaten mit Verbindungen, welche durchschnittlich mindestens 2 Zerewitinow-aktive Wasserstoffatome aufweisen, hergestellt werden, z.B. Polycarbodiimid-, Polyisocyanurat-, Polyharnstoff-, Polybiuret-, Polyamid-, Polyallophanat-, Polyurethanschäume, Mischtypen daraus oder sonstige Schäume auf Polyisocyanat-Basis. Besonders geeignet ist das vorliegende Verfahren zur Herstellung von Schaumstoffen mit Polyurethan-Gruppierungen.

Als erfindungsgemäss einzusetzende Ausgangskomponenten A) kommen aliphatische und cycloaliphatische Polyisocyanate in Betracht, wie sie z.B. von W. Siefken in Justus Liebigs Annalen der Chemie, 562, Seiten 75 bis 136, beschrieben werden, beispielsweise Äthylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DAS 1 202 785), 2,4-, und 2,6-Hexahydrotoluylendiisocyanat sowie beliebige Gemische dieser Isomeren, Hexahydro-1,3-und/oder -1,4-phenylendiisocyanat, Perhydro-2,4'- und/oder -4,4'-diphenylmethan-diisocyanat, sowie alle an sich bekannten Carbodiimidgruppen, Allophanatgruppen, Isocyanuratgruppen, Urethangruppen, acylierte Harnstoffgruppen, Biuretgruppen, Uretdiongruppen, Estergruppen, Äthergruppen, Thioäthergruppen und/oder Thioestergruppen enthaltenden Diisocyanate bzw. Polyisocyanate, denen voranstehend erwähnte monomere Isocyanate zugrundeliegen. Erfindungsgemäss können auch NCO-Gruppen aufweisende Präpolymere aus den erwähnten Isocyanaten und Verbindungen mit Zerewitinowaktiven H-Atomen (insbesondere Polyestern, Polyäthern, Polyesterpolyäthern, Polythioäthern, Polythioestern und/oder Polythioätherpolythioestern) bzw. auch Mischungen von NCO-Präpolymeren mit den monomeren Isocyanaten (sogenannte Semipräpolymere) eingesetzt werden. Ferner ist es möglich, beliebige Mischungen der vorgenannten Polyisocyanate einzusetzen.

Erfindungsgemäss für die Schaumstoffherstellung einzusetzende Ausgangskomponenten B) sind Verbindungen mit mindestens zwei gegenüber Isocyanaten reaktionsfähigen Wasserstoffatomen von einem Molekulargewicht in der Regel von 400–10 000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 800 bis 10 000, vorzugsweise 1000 bis 6000, z.B. mindestens zwei, in der Regel 2 bis 8, vorzugsweise aber 2 bis 4, Hydroxylgruppen aufweisende Polyester, Polyäther, Polythioäther, Polyacetale, Polycarbonate und Polyesteramide, wie sie für die Herstellung von homogenen und von zellförmigen Polyurethanen an sich bekannt sind:

a) Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

b) Auch die erfindungsgemäss in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z.B. in den DE-Auslegeschriften 1 176 358 und 1 064 938 beschrieben werden, sowie auf Formit oder Formose gestartete Polyäther (DE-Offenlegungsschrift 2 639 083 bzw. 2 737 951), kommen erfindungsgemäss in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch OH-Gruppen aufweisende Polybutadiene sind erfindungsgemäss geeignet.

c) Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z.B. um Polythiomischäther, Polythioätherester oder Polythioätheresteramide.

d) Als Polyacetale kommen z.B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z.B. Trioxan (DE-Offenlegungsschrift 1 694 128) lassen sich erfindungsgemäss geeignete Polyacetale herstellen.

e) Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

f) Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

g) Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenol-Formaldehyd-Harze

oder auch an Harnstoff-Formaldehydharze sind erfindungsgemäss einsetzbar.

h) Die genannten Polyhydroxylverbindungen können vor ihrer Verwendung im Polyisocyanat-Polyadditionsverfahren noch in der verschiedensten Weise modifiziert werden: So lässt sich gemäss DE-Offenlegungsschriften 2 210 839 (US-Patentschrift 3 849 515) und 2 544 195 ein Gemisch aus verschiedenen Polyhydroxylverbindungen (z.B. aus einem Polyäther- und einem Polyesterpolyol) durch Verätherung in Gegenwart einer starken Säure zu einem höhermolekularen Polyol kondensieren, welches aus über Ätherbrücken verbundenen verschiedenen Segmenten aufgebaut ist.

i) Erfindungsgemäss können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den oben genannten, Hydroxylgruppen aufweisenden Verbindungen ablaufen lässt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäss US-Patentschrift 3 869 413 bzw. DE-Offenlegungsschrift 2 550 860 eine fertige wässrige Polymerdispersion mit einer Polyhydroxylverbindung zu vermischen und anschliessend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyäthern (US-Patentschriften 3 383 351, 3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind für das erfindungsgemässe Verfahren geeignet. Bei Verwendung von Polyätherpolyolen, welche gemäss den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschriften 2 714 291, 2 739 620 und 2 654 746) können mit besonderem Vorteil in Kombinationen mit mineralischen Füllstoffen eingesetzt werden.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäss zu verwendenden Verbindungen sind z.B. in High Polymers, Vol XVI, «Polyurethanes, Chemistry and Technology», verfasst von Saunders-Frisch, Interscience Publishers, New York, London, Band I, 1962, Seiten 32–42 und Seiten 44–45 und Band II, 1964, Seiten 5–6 und 198–199, sowie im Kunststoff-Handbuch, Band VII, Vieweg-Höchtlen, Carl-Hanser-Verlag, München, 1966, z.B. auf den Seiten 45–71, beschrieben. Selbstverständlich können Mischungen der obengenannten Verbindungen mit mindestens zwei gegenüber Isocyanaten reaktionsfähigen Wasserstoffatomen mit einem Molekulargewicht von 400–10 000, z.B. Mischungen von Polyäthern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

Gegebenenfalls erfindungsgemäss einzusetzende Ausgangskomponenten sind ferner Verbindungen mit mindestens zwei gegenüber Isocyanaten reaktionsfähigen Wasserstoffatomen und einem Molekulargewicht von 32 bis 400. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:

Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und Sorbit, Ricinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Pulybutylenglykole mit einem Molekulargewicht bis 400, 4,4'-Dihydroxy-diphenylpropan, Di-hydroxymethyl-hydrochinon, Äthanolamin, Diäthanolamin, N-Methyldiäthanolamin, Triäthanolamin und 3-Aminopropanol.

Als niedermolekulare Polyole kommen erfindungsgemäss auch die Gemische von Hydroxyaldehyden und Hydroxyketonen («Formose») bzw. die hieraus durch Reduktion erhaltenen mehrwertigen Alkohole («Formit») in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäss als Polyolkomponente in Betracht (DE-Offenlegungsschrift 2 638 759).

Erfindungsgemäss werden Wasser und/oder leicht flüchtige anorganische oder organische Substanzen als Treibmittel mitverwendet. Als organische Treibmittel kommen z.B. Aceton, Äthylacetat, halogensubstituierte Alkane wie Methylenchlorid, Chloroform, Äthylidenchlorid, Vinylidenchlorid, Monofluortrichlormethan, Chlordifluormethan, Dichlordifluormethan, ferner Butan, Hexan, Heptan oder Diäthyläther, als anorganische Treibmittel z.B. Luft, $CO_2$ oder $N_2O$ in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

Vorzugsweise werden im erfindungsgemässen Verfahren zusätzlich Lichtstabilisatoren mitverwendet. Erfindungsgemäss einsetzbare Lichtstabilisatoren sind:

I. Piperidinderivate

4-Benzoyloxy-, 4-Salicyloyloxy-, 4-Capryloyloxy-, 4-Stearoyloxy-,
4-(β-3,5-Di-tert.-butyl-4-hydroxyphenyl-propionyloxy)- und
4-(3,5-Di-tert.-butyl-hydroxybenzoyloxy)-2,2,6,6-tetramethylpiperidin. 4-Benzoyloxy-,
4-Salicyloxyloxy-, 4-Stearoyloxy- und
4-tert.-Butylphenoyloxy-1,2,2,6,6-pentamethylpiperidin.
Bis-(2,2,6,6-tetramethyl-4-piperidyl)-sebacat,
Bis-(2,2,6,6-tetramethyl-4-piperidyl)-suberat,
Bis-(2,2,6,6-tetramethyl-4-piperidyl)-dodecandioat,
Bis-(1,2,2,6,6-pentamethyl-4-piperidyl)-sebacat.
4-Capryloyloxy-1-propyl-2,2,6,6-tetramethylpiperidin.
4-Capryloyloxy-1-allyl-2,2,6,6-tetramethylpiperidin. 4-Benzoyl-amido-, 4-Acryloylamido- und
4-Stearoylamido-2,2,6,6-tetramethylpiperidin;
2,4,6-Tris-(2,2,6,6-tetramethyl-4-piperidyloxy)-s-triazin,
2,4,6-Tris-(1,2,2,6,6-pentamethyl-4-piperidyloxy)-s-triazin,
2,4,6-Tris-(2,2,6,6-tetramethyl-4-piperidylamino)-s-triazin,
2,2,6,6-Tetramethyl-4-β-cyanoäthoxy-piperidin,
1,2,2,6,6-Pentamethyl-4-lauroyloxy-piperidin und
Triacetonaminoxim.

II. Benzophenonderivate

2,4-Dihydroxy-, 2-Hydroxy-4-methoxy-,
2-Hydroxy-4-octoxy-, 2-Hydroxy-4-dodecyloxy-,
2-Hydroxy-4-benzyloxy-,
2-Hydroxyl-4,4'-dimethoxy-, 2,2,4'-Trihydroxy-,
2,2'-Dihydroxy-4,4'-dimethoxy-,
2,2',4,4'-Tetrahydroxy-,
2,2'-Dihydroxy-4-methoxy-,
2-Hydroxy-2'-carboxy-4-methoxy-,
2,2'-Dihydroxy-4-octoxy- und
2,2'-Dihydroxy-4-dodecyloxy-benzophenon.

III. Benztriazolderivate

2-(2'-Hydroxy-5'-methylphenyl)-,
2-(2'-Hydroxy-5'-tert.-butylphenyl)-,
2-(2'-Hydroxy-5'-tert.-octylphenyl)-,
2-(2'-Hydroxy-3'-tert.-butyl-5'-methylphenyl)-,
2-(2'-Hydroxy-3'-tert.-butyl-5'-methylphenyl)-5-chlor-,
2-(2'-Hydroxy-3',5'-di-tert.-butylphenyl)-,
2-(2'-Hydroxy-3',5'-di-tert.-butylphenyl)-5-chlor-,
2-(2'-Hydroxy-3',5'-di-tert.-amylphenyl)-,
2-(2'-Hydroxy-3',5'-di-tert.-amylphenyl)-5-chlor-,
2-(2'-Hydroxy-3'-sec.-butyl-5'-tert.-butylphenyl)-,
2-(2'-Hydroxy-3'-tert.-butyl-5'-sec.-butylphenyl)-, 2-(2',4'-Dihydroxyphenyl)-,
2-(2'-Hydroxy-4'-methoxyphenyl)-,
2-(2'-Hydroxy-4'-octoxyphenyl)-,
2-(2'-Hydroxy-3'-α-phenyläthyl-5'-methylphenyl)- und
2-(2'-Hydroxy-3'-α-phenyläthyl-5'-methylphenyl)-5-chlorbenztriazol.

IV. Oxalanilide

2-Äthyl-2'-äthoxy-,
2-Äthyl-2'-äthoxy-5'-tert.-butyl-,
2-Äthyl-4-tert.-butyl-2'-äthoxy-5'-tert.-butyl-,
2,2'-Dimethoxy-, 2,2'-Diäthoxy-,
2-Methoxy-2'-äthoxy-, 2-Methoxy-4'-äthoxy-,
2-Äthoxy-4'-methoxy-,
2,2'-Dioctoxy-5,5'-di-tert.-butyl-,
2,2'-Diodecyloxy-5,5'-di-tert.-butyl-,
2-Äthoxy-2'-octoxy-, 4,4'-Di-octoxy-,
2-Äthyl-2'-butoxy- und
4-Methyl-4'-methoxyoxalanilid.

V. Salicylsäurephenylester und -derivate

Salicylsäurephenylester,

Salicylsäure-4-tert.-butylphenylester und Salicylsäure-4-tert.-octyl-phenylester.

VI. Zimtsäureesterderivate
α-Cyano-β-methyl -4- methoxyzimtsäuremethylester,
α-Cyano-β-methyl-4-methoxyzimtsäurebutylester, α-Cyano-β-phenyl-zimtsäureäthylester und
α-Cyano-β-phenylzimtsäureisooctylester.

VII. Malonesterderivate
4-Methoxy-benzylidenmalonsäuredimethylester,
4-Methoxy-benzylidenmalonsäurediäthylester,
4-Butoxy-benzylidenmalonsäuredimethylester.

Die vorgenannten Lichtstabilisatoren werden erfindungsgemäss bevorzugt einzeln, aber auch in beliebigen Kombinationen verwendet. Besonders bevorzugt werden Piperidinderivate eingesetzt.

Erfindungsgemäss können auch oberflächenaktive Zusatzstoffe (Emulgatoren und Schaumstabilisatoren) mitverwendet werden. Als Emulgatoren kommen z.B. die Natriumsalze von Ricinusölsulfonaten oder auch von Fettsäuren oder Salze von Fettsäuren mit Aminen wie ölsaures Diäthylamin oder stearinsaures Diäthanolamin in Frage. Auch Alkali- oder Ammoniumsalze von Sulfonsäuren wie etwa von Dodecylbenzolsulfonsäuren oder Dinaphthylmethandisulfonsäure oder auch von Fettsäuren wie Ricinolsäure oder von polymeren Fettsäuren können als oberflächenaktive Zusatzstoffe mitverwendet werden, ausserdem äthoxyliertes Nonylphenol.

Als Schaumstabilisatoren kommen vor allem Polyäthersiloxane, speziell wasserlösliche Vertreter, infrage. Diese Verbindungen sind im allgemeinen so aufgebaut, dass ein Copolymerisat aus Äthylenoxid und Propylenoxid mit einem Polydimethylsioloxanrest verbunden ist. Derartige Schaumstabilisatoren sind z.B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäss DE-Offenlegungsschrift 2 558 523.

Die vorgenannten Emulgatoren oder Stabilisatoren werden erfindungsgemäss bevorzugt einzeln, aber auch in beliebiger Kombination verwendet. Besonders bevorzugt sind äthoxylierte Nonylphenole, insbesondere ein Nonylphenol mit ca. 6 Äthylenoxid-Einheiten.

Erfindungsgemäss können ferner auch Reaktionsverzögerer, z.B. sauer reagierende Stoffe wie Salzsäure, Schwefelsäure, Phosphorsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-cloräthylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Russ oder Schlämmkreide.

Weitere Beispiele von gegebenenfalls erfindungsgemäss mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemässen Verfahrens:
Die Reaktionskomponenten werden erfindungsgemäss nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäss infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Die Schaumstoffherstellung wird erfindungsgemäss in geschlossenen Formen durchgeführt. Als Formmaterial kommt Metall, z.B. Aluminium, oder Kunststoff, z.B. Epoxidharz, in Frage. In der Form schäumt das schäumfähige Reaktionsgemisch auf und bildet den Formkörper. Die Formverschäumung kann dabei so durchgeführt werden, dass das Formteil an seiner Oberfläche Zellstruktur aufweist, sie kann aber auch so durchgeführt werden, dass das Formteil eine kompakte Haut und einen zelligen Kern aufweist. Erfindungsgemäss kann man in diesem Zusammenhang so vorgehen, dass man in die Form so viel schäumfähiges Reaktionsgemisch einträgt, dass der gebildete Schaumstoff die Form gerade ausfüllt. Man kann aber auch so arbeiten, dass man mehr schäumfähiges Reaktionsgemisch in die Form einträgt, als zur Ausfüllung des Forminneren mit Schaumstoff notwendig ist. Im letztgenannten Fall wird somit unter «over-charging» gearbeitet; eine derartige Verfahrensweise ist z.B. aus den US-Patentschriften 3 178 490 und 3 182 104 bekannt.

Bei der Formverschäumung werden vielfach an sich bekannte «äussere Trennmittel», wie Siliconöle, mitverwendet. Man kann aber auch sogenannte «innere Trennmittel», gegebenenfalls im Gemisch mit äusseren Trennmitteln, verwenden, wie sie z.B. aus den DE-Offenlegungsschriften 2 121 670 und 2 307 589 bekanntgeworden sind.

Erfindungsgemäss lassen sich auch kalthärtende Schaumstoffe herstellen (vgl. GB-Patentschrift 1 162 517, DE-Offenlegungsschrift 2 153 086).

Die Verfahrensprodukte können in harter Einstellung zur Herstellung von Möbelteilen, Karosserieteilen von Fahrzeugen, technischen Geräten und Bauelementen Verwendung finden, sowie in halbharter bis weicher Einstellung zur Herstellung von Sicherheitspolsterungen im Automobilbau, elastischen Schuhsohlen, Stossfängern usw.

Im folgenden sei das erfindungsgemässe Verfahren beispielhaft beschrieben. Die angegebenen Teile sind Gewichtsteile, sofern nicht anders vermerkt. Die Prozentangaben stellen Gewichtsprozente dar.

Beispiel 1

100 Teile eines Polyolgemisches der OH-Zahl 588 mit einer Viskosität bei 25°C von 4300 mPa.s, bestehend aus 35 Teilen eines Polyäthers der OH-Zahl 36, der erhalten wurde durch Anlagerung von Propylenoxid und Äthylenoxid an Trimethylolpropan, und 65 Teilen eines Polyäthers der OH-Zahl 900, der erhalten wurde durch Anlagerung von Propylenoxid an Trimethylolpropan,

3 Teile äthoxyliertes Nonylphenol als Stabilisator,
0,12 Teile KOH,
0,6 Teile Dibutylzinn(IV)-bis-(dodecylmercaptid),
10 Teile Trifluorchlormethan und
182 Teile eines aliphatischen Polyisocyanats mit einem NCO-Gehalt von 28,9%, und einer Viskosität von 900 mPa.s, das hergestellt wurde durch Präpolymerisation von Isophorondiisocyanat mit dem obigen Anlagerungsprodukt aus Propylenoxid und Trimethylolpropan (OH-Zahl 900),
werden miteinander vermischt und in eine geschlossene, auf 70°C temperierte Metallform eingetragen. Nach 5 Min. wird das Formteil der Form entnommen. Es ist gut entformbar, hat eine Gesamtrohdichte von 0,6 g/cm³ und eine allseits geschlossene, kompakte Haut.

Die Start- und Abbindezeit wird an einem Teil des Reaktionsgemisches bestimmt, der in eine offene Form ausgegossen wird. Die Startzeit beträgt 33 Sekunden, die Abbindezeit 55 Sekunden.

Beispiel 2

Es wird analog Beispiel 1 gearbeitet mit dem einzigen Unterschied, dass anstelle von 0,12 Teilen KOH 0,12 Teile NaOH eingesetzt werden. Die Startzeit beträgt 32 Sekunden, die Abbindezeit 46 Sekunden. Das Material ist gut entformbar.

Beispiel 3 (Vergleich)

Beispiel 1 wird wiederholt mit dem Unterschied, dass anstelle von 0,6 Teilen Dibutylzinn(IV)-bis-(dodecyl-mercaptid) 0,6 Teile Dibutylzinn(IV)-dilaurat eingesetzt werden. Die Startzeit beträgt 105 Sekunden, die Abbindezeit 120 Sekunden. Das Material ist schlecht entformbar und an der Oberfläche klebrig.

Beispiel 4 (Vergleich)

Anstelle von 0,6 Teilen des Mercaptids in Beispiel 1 werden 0,4 Teile Zinn(II)-octoat eingesetzt. Die Startzeit beträgt 22 Sekunden, die Abbindezeit 110 Sekunden. Das Material ist schlecht entformbar und weist eine spröde Deckschicht auf.

**Patentansprüche**

1. Verfahren zur Herstellung von Schaumstoffkörpern mit kompakter Oberfläche und zelligem Kern sowie integraler Dichteverteilung über den Querschnitt der Formkörper durch Umsetzung eines schäumfähigen Reaktionsgemisches aus
A) Polyisocyanaten,
B) höhermolekularen und/oder niedermolekularen Verbindungen mit durchschnittlich mindestens zwei gegenüber Isocyanaten reaktiven Wasserstoffatomen, in Gegenwart von
C) Katalysatoren für die Isocyanat-Polyadditionsreaktion sowie
D) Treibmitteln und gegebenenfalls weiteren an sich bekannten Zusatzstoffen,
in einer geschlossenen Form unter den Bedingungen der Formverschäumung, dadurch gekennzeichnet, dass als Komponente A) aliphatische und/oder alicyclische Polyisocyanate und als Komponente C) Katalysator-Kombinationen aus
(i) einem Alkali- und/oder Erdalkalihydroxid, insbesondere Lithium-, Natrium-, Kalium-, Magnesium- und/oder Calciumhydroxid und
(ii) einer schwefelhaltigen metallorganischen Verbindung der allgemeinen Formel

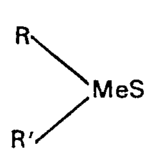 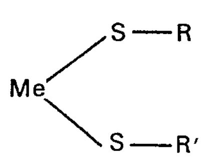 und 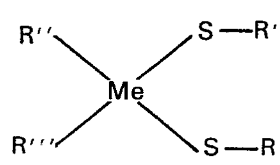

in der
Me Zinn oder Blei darstellt,
R, R', R'' und R''' gleich oder verschieden sind und für einen verzweigten oder linearen Alkylrest mit 1 bis 20 C-Atomen oder einem gegebenenfalls durch $C_1$-$C_4$-Alkylgruppen substituierten Cycloalkylrest mit 6 bis 15 C-Atomen oder einen gegebenenfalls mit $C_1$-$C_6$-Alkylgruppen substituierten Phenylrest stehen,

eingesetzt werden.

2. Verfahren nach Anspruch 1, dadurch gekennzeichnet, dass als schwefelhaltige metallorganische Verbindungen zinnorganische Verbindungen eingesetzt werden.

3. Verfahren nach Anspruch 1 und 2, dadurch gekennzeichnet, dass als schwefelhaltige metallorganische Verbindungen solche der allgemeinen Formel

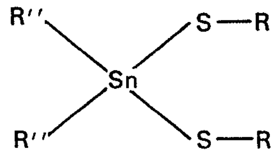

in welcher
R für einen gegebenenfalls verzweigten Alkylrest mit 8 bis 12 C-Atomen und
R″ für einen gegebenenfalls verzweigten Alkylrest mit 4 bis 8 C-Atomen stehen,
eingesetzt werden.

4. Verfahren nach Anspruch 1 bis 3, dadurch gekennzeichnet, dass als Katalysator eine Kombination aus Kaliumhydroxid und Dibutylzinn(IV)-bis-dodecylmercaptid eingesetzt wird.

**Revendications**

1. Procédé de préparation de corps en mousse à surface compacte et noyau alvéolaire avec répartition intégrale de la densité sur la section du corps moulé par réaction d'un mélange gonflable en mousse consistant en:

A) des polyisocyanates,
B) des composés à haut moléculaires et/ou à bas poids moléculaire contenant en moyenne au moins 2 atomes d'hydrogène réactif avec les isocyanates, en présence:
C) des catalyseurs de la réaction de polyaddition des isocyanates et
D) des agents gonflants et, le cas échéant, d'autres addititifs connus en soi, dans un moule fermé, dans les conditions du gonflement en moule, caractérisé en ce que l'on utilise en tant que composant A) des polyisocyanates aliphatiques et/ou alicycliques et en tant que composant C) des combinaisons de catalyseurs consistant en:
(i) un hydroxyde alcalin et/ou alcalino-terreux, en particulier l'hydroxyde de lithium, de sodium, de potassium, de magnésium et/ou de calcium et
(ii) un composé organométallique contenant du soufre, de formule générale

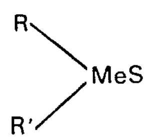

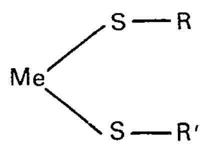

et

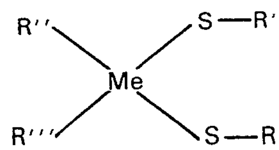

dans laquelle
Me représente l'étain ou le plomb,
R, R′, R″ et R‴, identiques ou différents, représentent un reste alkyle linéaire ou ramifié contenant de 1 à 20 atomes de carbone ou un reste cycloalkyle en $C_6$-$C_{15}$ éventuellement substitué par des groupes alkyle en $C_1$-$C_4$ ou un groupe phényle éventuellement substitué par des groupes alkyle en $C_1$-$C_6$.

2. Procédé selon la revendication 1, caractérisé en ce que l'on utilise en tant que composés organométalliques contenant du soufre des composés organiques de l'étain.

3. Procédé selon les revendications 1 et 2, caractérisé en ce que l'on utilise en tant que composés organométalliques contenant du soufre des composés de formule générale

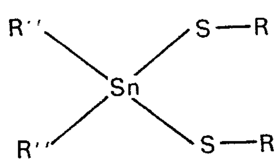

dans laquelle
R représente un reste alkyle éventuellement ramifié en $C_8$-$C_{12}$ et R″ représente un reste alkyle éventuellement ramifié en $C_4$-$C_8$.

4. Procédé selon les revendications 1 à 3, caractérisé en ce que l'on utilise en tant que catalyseur une combinaison d'hydroxyde de potassium et de bis-dodécylmercaptide de dibutyl-étain (IV).

**Claims**

1. A process for the production of moulded foams having a compact surface and cellular core and an integral density distribution over the cross-section of the body by reaction of a foamable reaction mixture of:
A) polisocyanates, and
B) relatively high molecular and/or low molecular compounds having an average of at least two isocyanate-reactive hydrogen atoms in the presence of:
C) catalysts for the isocyanate polyaddition reaction and
D) blowing agents and optionally other known additives, in a closed mould under the conditions of foaming inside moulds, characterised in that the polyisocyanates used as component A) are aliphatic and/or alicyclic polyisocyanates and the catalysts used as component C) are catalyst combinations of:
(i) an alkali metal and/or alkaline earth metal hydroxide, in particular a hydroxide of lithium, sodium, potassium, magnesium and/or calcium and
(ii) a sulphur-containing organometallic compound of the general formula

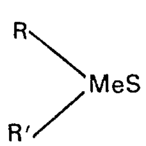

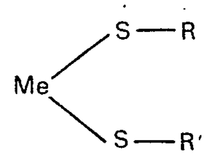

and

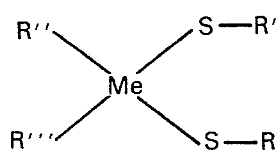

wherein

Me represents tin or lead and

R, R', R'' and R''' are the same or different and represent a straight or branched chain alkyl group having from 1 to 20 carbon atoms or a cycloalkyl group having from 6 to 15 carbon atoms optionally substituted by $C_1$-$C_4$ alkyl groups or a phenyl group optionally substituted by $C_1$-$C_6$-alkyl groups.

2. Process according to Claim 1, characterised in that the sulphur-containing organometallic compounds used are organotin compounds.

3. Process according to Claim 1 and 2, characterised in that the sulphur-containing organometallic compounds used are those of the general formula

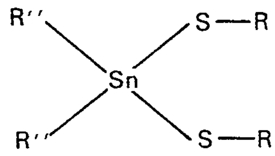

wherein

R represents a straight or branched chain alkyl group having from 8 to 12 carbon atoms and

R'' represents a straight or branched chain alkyl group having from 4 to 8 carbon atoms.

4. A process according to Claim 1 to 3, characterised in that the catalyst used is a combination of potassium hydroxide and dibutyl tin(IV)-bis-dodecylmercaptide.